# EUROPEAN PATENT APPLICATION

(11) **EP 1 876 054 A1**
(43) Date of publication of application: **09.01.2008**
(21) Application number: 07110646.2
(22) Date of filing: 20.06.2007
(51) Int. Cl.: B60Q 1/04, B60Q 1/20

(54) **Improvements relating to mounting for vehicle fog lamps**

(30) Priority: 06.07.2006 GB 0613395
(71) Applicant: Nissan Motor Manufacturing (UK) Ltd., Cranfield, Bedfordshire MK43 0DB (GB)
(72) Inventor: Loseby, Richard Nissan Motor Manufacturing (UK), Cranfield, Bedfordshire MK43 0DB (GB)
(74) Representative: Hufton, Victoria Alice

(57) **Abstract**

A mounting 2 for a fog lamp, which is arranged to be secured to a vehicle structure 24 and comprises a projection 18 for insertion into an associated aperture 38 in the structure 24 to locate the mounting 2 before it is secured to the structure 24. A vehicle structure 24 arranged to support a mounting 2 for a fog lamp and a method of locating a fog lamp mounting are also provided.

## Description

The present invention relates to mountings for vehicle fog lamps and a vehicle structure adapted to support such mountings.

It is commonly known that fog lamps are fitted in vehicles to enhance driver visibility in fog, rain, snow, or dust and are intended to be used in conjunction with standard headlamp low beams.

Fog lamps are conventionally supported by mountings, which are in turn secured to a vehicle structure. Whilst fog lamps can be fitted in a variety of locations, they are most commonly installed within front or rear vehicle bumpers, for instance such that their light emitting surface lies flush with, or just below, the bumper surface. Thus fog lamps are often secured within vehicle bumpers with the aid of appropriate mountings.

A conventional fog lamp mounting takes the form of a substantially annular bracket which is secured to a fog lamp to frame the fog lamp in use, usually near its light emitting surface. Once secured to a fog lamp, a conventional mounting enables the fog lamp to be fitted to a vehicle structure by means of securing formations such as one or more apertures or lugs which are adapted to receive fixing screws or studs.

Fog lamp mountings act as intermediate components which ensure that fog lamps can be conveniently fitted. However, a number of problems are associated with known fog lamp mountings. For example, since fog lamps are generally fitted in assembly lines where little labour time is available, they are sometimes mounted askew of their intended orientation, which is undesirable.

Further, the amount of labour time required to fit fog lamps using conventional mountings is considered to be too high in most assembly line environments. Time and care are needed to fit conventional mountings since they often slide from their intended position during fitting: it is particularly difficult to stabilise conventional fog lamps using only one hand, whilst they are being fastened with the other hand. There is thus a need for a fog lamp mounting which can be fitted quickly, easily and accurately in an assembly line.

From a first aspect, the present invention resides in a mounting for a fog lamp which is arranged be secured to a vehicle structure (for example a vehicle bumper) and comprises a projection for insertion into an associated aperture in the structure to locate the mounting before it is secured to the structure.

The projection enables the mounting to be located comparatively easily and accurately, particularly in an assembly line environment.

Advantageously, the projection is arranged to support the mounting in an anchored but movable position when the projection is inserted into the first aperture. To give effect to this feature, the projection may conveniently have a lateral protrusion arranged for engagement with an edge of the first aperture to anchor the mounting.

To improve flexibility during installation of the mounting, the projection may be arranged to be deliberately removable from the first aperture to allow deliberate disengagement of the mounting from the vehicle structure.

Preferably the projection serves as a first locating feature of the mounting and the mounting comprises a second locating feature, the first and second locating features in combination serving to locate the mounting on a vehicle structure in use.

Conveniently, the second locating feature may comprise an indentation or formation for co-operating with a contour of the vehicle structure.

To further improve the accuracy with which the mounting may be located, the mounting may further comprise a third locating feature that combines with the first and second locating features to locate the mounting in use. The third locating feature may also conveniently comprise an indentation or formation for co-operating with a contour of the structure.

From a second aspect, the invention broadly resides in a vehicle structure, such as a vehicle bumper, arranged to support a mounting for a fog lamp, the vehicle structure comprising: at least one aperture for receiving an associated first locating feature of the mounting to provide a first location point; and at least one indentation or formation for co-operating with a second locating feature of the mounting to provide a second location point, the first and second location points combining to locate the mounting with respect to the structure.

From a third aspect, the invention broadly resides in a mounting for a fog lamp in combination with a vehicle structure (such as a bumper) arranged to support the mounting, wherein one of the mounting and the vehicle structure comprises a projection for insertion into an associated aperture in the other of the mounting and the vehicle structure to locate the mounting with respect to the vehicle structure.

From a fourth aspect, the invention broadly resides in a method of locating a fog lamp mounting on a vehicle structure (such as a bumper) the mounting comprising an anchoring projection and a secondary locating feature, the method comprising: inserting the anchoring projection into a first aperture in the structure to support the mounting, in an anchored, but movable position; and moving the anchored mounting so as to locate the secondary locating feature of the mounting on the vehicle structure.

In order that this invention may be more readily understood, reference will now be made, by way of example, to the accompanying drawings in which:
Figure 1 is an inner view of a mounting according to a preferred embodiment of the invention;
Figure 2 is a side view of the mounting of Figure 1;
Figure 3 is an inner view of a vehicle bumper according to a preferred embodiment of the invention;
Figure 4 is a perspective view of the mounting of Figure 1, a fog lamp and the bumper of Figure 3; and
Figure 5 is a schematic sectional side view of the mounting of Figure 1, a fog lamp and the bumper of Figure 3.

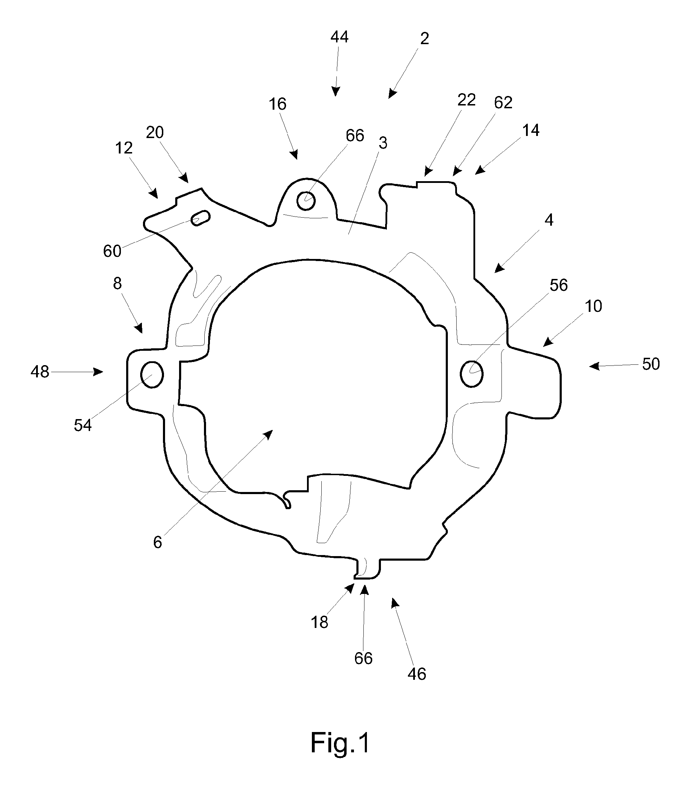

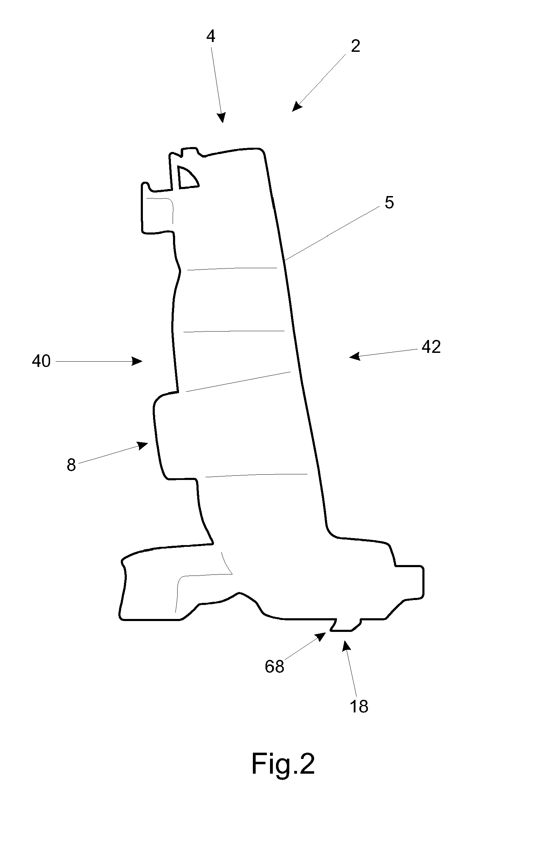

Referring firstly to Figures 1 and 2, a mounting 2 for a fog lamp comprises: a generally annular PVC bracket 4 defining a central opening 6; first and second fog lamp securing formations 8, 10; first and second bumper securing formations 12, 14; a storage formation 16; a primary locating projection 18; and first and second secondary locating projections 20, 22. The bracket 4, the formations 12, 14, 16 and the projections 18, 20, 22 are all integrally moulded.

The bracket 4 comprises a generally annular planar portion 3 which defines the central opening 6 and an outer skirt portion 5 extending from the periphery of the planar portion 3 at an angle of about thirty degrees to the planar portion 3.

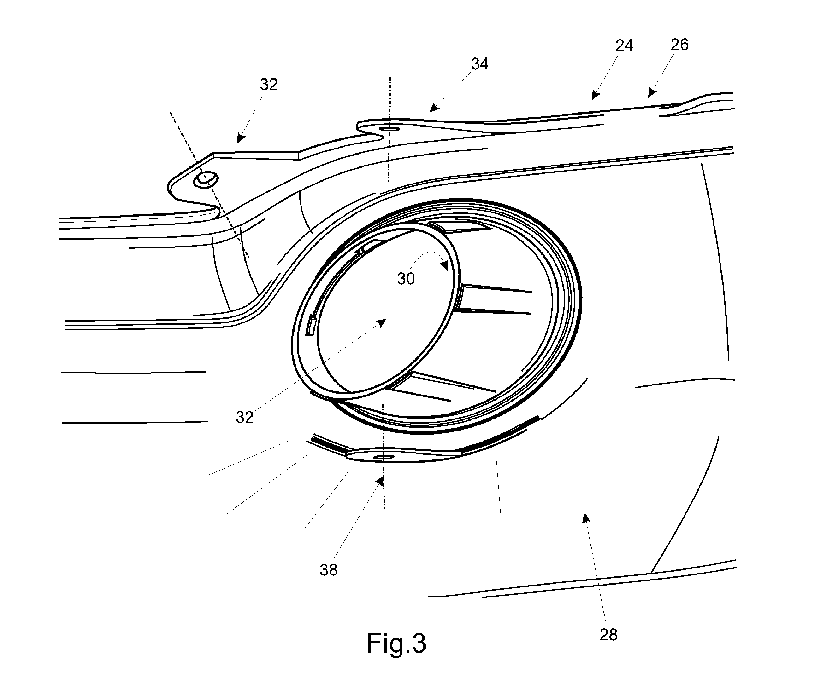

Referring to Figure 3, a vehicle bumper 24 adapted for supporting the mounting 2 of Figure 1 comprises a frame 26 having: an inner side 28 facing a vehicle (not shown) in use; an outer side 30 facing away from a vehicle (not shown) in use; a central opening 32 from the inner side 28 to the outer side 30; first and second support formations 32, 34 for securing the mounting 2 to the bumper 24; and an aperture 38 for receiving the primary locating projection 18 of the mounting 2 to help locate the mounting 2 on the bumper 24.

Returning to Figures 1 and 2, the mounting 2 is asymmetrical, largely due to the various formations 12, 14, 16 and projections 18, 20, 22 on the bracket 4, and there is thus a predetermined orientation in which the mounting 2 is secured to the bumper 24 in use. Based on this orientation, the mounting 2 can be said to have an outer side 40, facing in the direction in which a fog lamp supported by the mounting emits light, and an inner side 42 facing in the opposite direction. Further, again based on the orientation of the mounting 2 in use, and with reference to the inner side perspective of Figure 1, the mounting 2 can also be said to comprise an upper side 44, a lower side 46, a left side 48 and a right side 50.

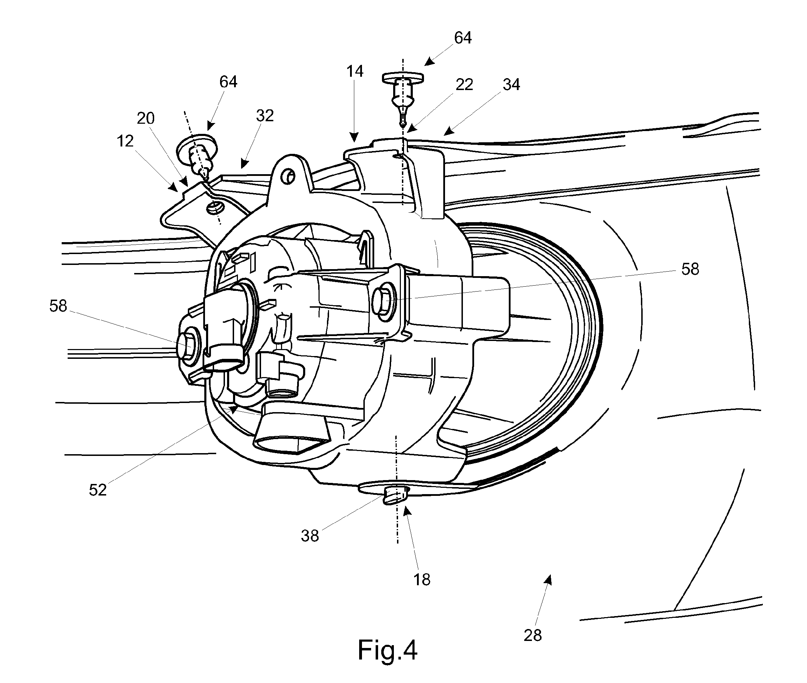

The first and second fog lamp securing formations 8, 10 project at the left and right sides 48, 50 of the mounting 2 respectively and serve as an interface between the mounting 2 and a fog lamp 52 that is supported thereby in use, as shown in Figure 4. Specifically, the first and second fog lamp securing formations 8, 10 comprise respective apertures 54, 56, which serve to receive fixing screws 58 of the fog lamp, which is secured to the mounting on the inner side 42 thereof in use.

The bracket 4 is inclined with respect to the orientation of the apertures 54, 56 of the first and second fog lamp securing formations 8, 10 by an angle of approximately thirty degrees. Thus, when the fog lamp 52 is secured to the first and second fog lamp securing formations 8, 10 by the fixing screws 58 inserted into the apertures 54, 56 from the inner side 42, the bracket 4 is also inclined at an angle of approximately thirty degrees with respect to the direction of insertion of the fixing screws 58.

The annular bracket 4 is inclined with respect to the fixing screws 58 as described above because the mounting 2 according to this embodiment is adapted to support and complement a fog lamp 52 which comprises a light emitting surface that is similarly inclined at an angle of approximately thirty degrees with respect to the fixing screws 58 of the fog lamp 52. The incline of the bracket 4 and the incline of the light emitting surface of the fog lamp 52 are complementary and the mounting 2 therefore frames the light emitting surface of the fog lamp 52 in use, with the central opening 6 providing an optical path for light from the inner side 42 of the mounting 2 to the outer side 40.

As described in detail below, the mounting 2 is secured to the vehicle bumper 24 with the aid of the first and second bumper securing formations 12, 14, the primary locating projection 18, and the first and second secondary locating projections 20, 22. The first and second bumper securing formations 12, 14 each extend at the upper side 44 of the mounting 2 and comprise respective apertures 60, 62 for receiving fixing screws 64. The axis of the aperture 60 of the first bumper securing formation is oriented radially with respect to the generally annular bracket 4, whilst the axis of the aperture 62 of the second bumper formation, which is not visible in Figure 1, is oriented away from the bracket 4 towards the upper side 44. The storage formation 16 also comprises an aperture 66, which lies in the same plane as the central opening 6 of the bracket 4.

Referring to Figure 4, the orientation of the bumper securing formations 12, 14 of the mounting 2 complements the arrangement of support formations 32, 34 on the bumper 24, which also comprise apertures. Thus the mounting can be secured to the bumper 24 with the help of fixing screws 64 inserted through the support formations 32, 34 and bumper securing formations 12, 14, as described in greater detail below.

The primary locating projection 18 and the secondary locating projections 20, 22 serve to locate the mounting 2 before, whilst and after it is secured to the bumper 24. The primary locating projection 18 extends from the lower side of the mounting 2 and takes the form of a peg comprising, at its free end, a protrusion 68 in the direction of the inner side 40 of the mounting to create a hook shape.

The first and second secondary locating projections 20, 22 are integral with the first and second bumper securing formations 12, 14 respectively. The first secondary locating projection 20 extends radially from the substantially annular bracket 4, whilst the second secondary projection 22 extends from the mounting in the upper direction 44. Both secondary locating projections 20, 22 are on the inwardly facing side of their respective bumper securing formations 12, 14 and are block shaped, comprising a respective outwardly facing surface.

The orientation and shape of the primary locating projection 18 and the first and second secondary locating projections 20, 22 of the mounting 2 correspond to the orientation and shape of the aperture 38 and the support formations 32, 34 of the bumper 24 respectively.

Having described the core structural components of the mounting 2 and the bumper 24, their interaction in the context of fitting a fog lamp 52 will now be explained.

Referring to Figure 4, to secure a fog lamp 52 to the mounting 2, the fog lamp 52 is screwed or riveted to the first and second fog lamp securing formations 8, 10. This typically occurs during a first assembly line step. Thereafter, the fog lamp 52 and the mounting 2 are supplied to a second assembly line step in combination, where they are secured to the vehicle bumper 24.

The mounting 2 is adapted to be installed in the bumper 24 before the bumper 24 is itself fitted to a vehicle (not shown). It is thus envisaged that the mounting 2, with the fog lamp 52 secured thereto, is secured to the bumper 24 on its inner side 28, i.e. the side of the bumper 24 that faces the vehicle once the bumper 24 is fitted.

To ensure accurate installation of the mounting 2 in the bumper 24, the mounting 2 is initially located with the help of the primary locating projection 18 and the first and second secondary locating projections 20, 22: the primary locating projection 18 is inserted into the associated aperture 38 in the bumper 24 to provide a first location point; thereafter, the mounting 2 is lowered into position until the first and second secondary locating projections 20, 22 of the mounting 2 come into contact with, and cooperate with, the complementary support formations 32, 34 on the bumper 24 to provide second and third location points. The above location steps can be performed one-handed.

The first, second and third location points combine to locate the mounting in its desired position. Thereafter, fixing screws 64 are inserted through the support formations 32, 34 and apertures 60, 62 in the bumper securing formations 12, 14 to secure the mounting.

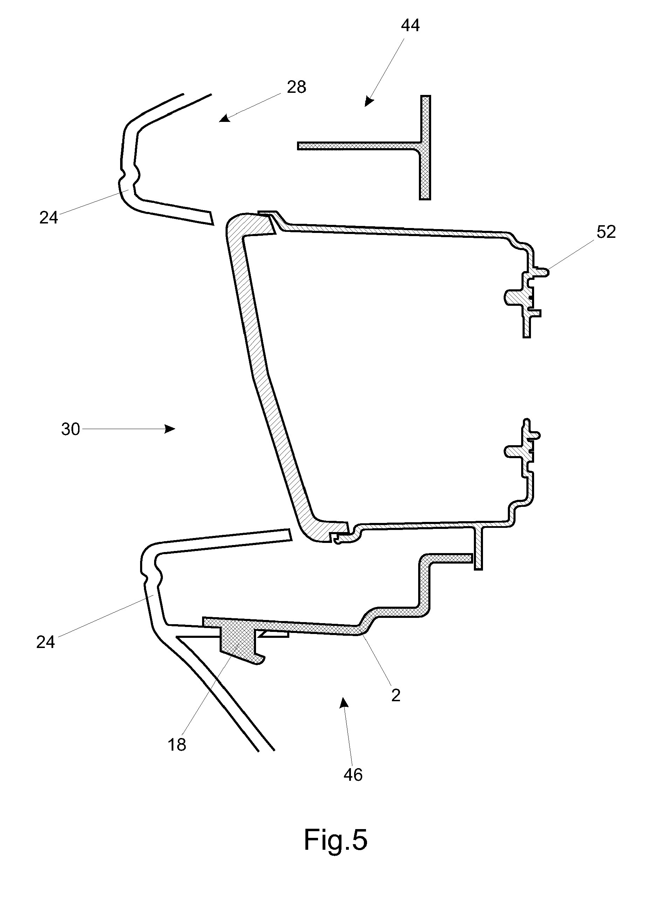

Referring finally to the schematic view of Figure 5, once the mounting 2 has been secured to the bumper 24 with the help of fixing screws 64, the primary projection 18 is permanently anchored within its associated aperture 38 in the bumper 24. Thus the mounting 2 is secured firmly in position without the need for a corresponding fixing screw 58 to secure the lower end 46 of the mounting 2 to the bumper 24.

The embodiment of the invention described above is not to be seen as limiting in any way. The skilled person will appreciate that a number of modifications to the embodiment are possible without departing from the scope of the present invention. For example it would be, possible to vary the shape, number or positioning of the locating projection to take into account any changes in the shape of the formations with which they cooperate. Indeed it is also possible for one or more locating projections/features to form part of the bumper, with the mounting then comprising associated apertures/formations.

## Claims

1. A mounting bracket for attaching a fog lamp to a vehicle bumper, the bracket comprising;
fog lamp securing formations (8, 10) configured to receive screws from the fog lamp;
locating projections (18, 20, 22) configured to locate the mounting bracket before, whilst and after it is secured to the bumper; and
bumper securing formations (12,14) for securing the bracket to the vehicle bumper.

2. The mounting of claim 1, wherein at least one of the locating projections is arranged to support the mounting in an anchored but movable position when the projection is inserted into the first aperture.

3. The mounting of claim 1 or claim 2, wherein at least one of the locating projections has a lateral protrusion arranged for engagement with an edge of the first aperture to anchor the mounting.

4. The mounting of any preceding claim, wherein at least one of the locating projections is arranged to be deliberately removable from the first aperture to allow deliberate disengagement of the mounting from the vehicle structure.

5. The mounting of claim 4, wherein a second locating projection comprises an indentation or formation for co-operating with a contour of the vehicle structure.

6. The mounting of claim 5, wherein a third locating projection is configured to combine with the first and second locating projections to locate the mounting in use.

7. The mounting of claim 6, wherein the third locating projection comprises an indentation or formation for co-operating with a contour of the vehicle structure.
